# EUROPÄISCHE PATENTSCHRIFT

(11) **EP 0 996 986 B1**
(45) Veröffentlichungstag und Bekanntmachung des Hinweises auf die Patenterteilung: **10.07.2002**
(21) Anmeldenummer: 98922775.6
(22) Anmeldetag: 24.04.1998
(51) Int. Cl.: H01M 2/12

(54) **BATTERIESTOPFEN**
BATTERY PLUG
BOUCHON D'ACCUMULATEUR

(43) Veröffentlichungstag der Anmeldung: 03.05.2000
(73) Patentinhaber: Oschmann, Elke, 85230 Bergkirchen (DE)
(72) Erfinder: Oschmann, Elke, 85230 Bergkirchen (DE)
(74) Vertreter: Gustorf, Gerhard, Dipl.-Ing.
(86) Internationale Anmeldenummer: EP9802444
(87) Internationale Veröffentlichungsnummer: WO9956330

(56) Entgegenhaltungen:
- DE-A- 1 496 263
- DE-U- 7 825 161
- FR-A- 1 252 543
- FR-A- 2 532 475
- US-A- 2 610 986
- US-A- 2 937 223
- US-A- 3 944 437
- US-A- 4 689 281
- PATENT ABSTRACTS OF JAPAN vol. 097, no. 006, 30. Juni 1997 -& JP 09 045305 A (JAPAN STORAGE BATTERY CO LTD), 14. Februar 1997 -& DATABASE WPI Derwent Publications Ltd., London, GB; AN 97-185188 XP002087835 A
- PATENT ABSTRACTS OF JAPAN vol. 012, no. 038 (E-580), 4. Februar 1988 -& JP 62 193058 A (MATSUSHITA ELECTRIC IND CO LTD;OTHERS: 01), 24. August 1987

## Beschreibung

Die Erfindung betrifft einen Stopfen zum Verschließen von Batteriezellen mit einem in eine Öffnung der Zelle einsetzbaren, im wesentlichen zylindrischen, unten offenen Gehäuse, dessen obere Öffnung durch einen Deckel verschließbar ist.

Bei Batterien für Kraftfahrzeuge werden die Akkumulatorzellen durch einen Stopfen verschlossen, der mittels eines Gewindes in die Öffnung der Zelle eingeschraubt ist. Da bei diesen Batterien der Füllstand des flüssigen Elektrolyten nur in sehr langen Zeitabständen kontrolliert werden muß, ist ein derartiger Schraubstopfen völlig ausreichend. Leistungsstärkere Batterien (HD-Akkumulatoren) müssen hingegen in wesentlich kürzeren Zeitabständen kontrolliert und nachgefüllt werden, so daß für diese Batterien Stopfen der eingangs umrissenen Bauart verwendet werden, deren obere Öffnung - die Kontroll- und Nachfüllöffnung - durch einen Deckel verschließbar ist. Damit wird die in kurzen Zeitabständen erforderliche Kontrolle des Füllstandes erleichtert. Nachteilig ist jedoch, daß Hochleistungsbatterien je nach Einsatzzweck sehr häufig nachgefüllt werden müssen, in vielen Fällen sogar täglich, um den Flüssigkeitsverlust in der Zelle auszugleichen.

Der Erfindung liegt die Aufgabe zugrunde, einen Batteriestopfen der angegebenen Gattung zur Verfügung zu stellen, der so ausgebildet ist, daß die aus der Zelle aufsteigende, verdunstende Flüssigkeit mit einfachen Mitteln aufgefangen und wieder in die Zelle zurückgeführt wird, so daß Kontrolle und Nachfüllen in wesentlich längeren Zeitabständen durchgeführt werden können.

Bei einem Stopfen der angegebenen Bauart wird diese Aufgabe erfindungsgemäß dadurch gelöst, daß im Bereich der oberen Öffnung des Gehäuses ein Sammelorgan zur Aufnahme aufsteigender und kondensierter Gase angeordnet ist.

Da dieses Sammelorgan im oberen Bereich des Stopfens vorgesehen ist, wo geringere Temperaturen als in den darunterliegenden Zonen herrschen, wird die Kondensierung des aufsteigenden Gases begünstigt, so daß die Flüssigkeit hier gesammelt und in die Zelle zurückgeleitet werden kann.

Eine besonders wirkungsvolle Lösung wird dadurch erreicht, daß das Sammelorgan aus einer Vielzahl von Stiften besteht, die von einer Decke des Sammelorgans nach unten abstehen. Mit der Vielzahl der Stifte steht eine sehr große Oberfläche für die Kondensation zur Verfügung. Die Stifte bewirken, daß die kondensierte Flüssigkeit nach unten abtropft und in die Zelle zurückgeleitet werden kann.

Es ist besonders vorteilhaft, wenn das Sammelorgan aus einem Labyrintheinsatz besteht, der eine von Löchern durchsetzte Decke hat, von der die Stifte nach unten abstehen. Dieser Labyrintheinsatz kann mit Schnappsitz oder in anderer Weise an der Innenseite des Deckels befestigt werden oder auch einstückig mit diesem ausgebildet sein.

In der Praxis hat es sich als besonders vorteilhaft erwiesen, wenn bei geschlossenem Deckel der Labyrintheinsatz mit seinem unteren Rand eine Abdichtung gegen die Innenwand des Gehäuses bildet und zwischen seiner Decke und der Innenseite des Deckels einen flachen Durchgangsraum begrenzt, der über seitliche Durchtrittsöffnungen mit einem Ringraum zwischen dem Labyrintheinsatz und der eine Entgasungsöffnung aufweisenden Innenwand des Gehäuses verbunden ist.

Bei dieser Lösung streichen die im Betrieb entstehenden, aufsteigenden Gase in dem Stopfengehäuse zunächst an den Stiften vorbei, wo sich die kondensierende Flüssigkeit niederschlägt; danach treten die Gase durch die Löcher in der Decke in den flachen Durchgangsraum, wo nochmals eine Rückhaltung kondensierenden Gases erfolgt. Die nahezu vollständig entfeuchteten Gase gelangen dann über die seitlichen Durchtrittsöffnungen in den Ringraum und können von dort über die Entgasungsöffnung nach außen entweichen.

Batteriestopfen der erläuterten Bauart, die für eine manuelle Nachfüllung von Flüssigkeit vorgesehen sind, haben im allgemeinen einen nach unten konisch verjüngten Korb, der von oben in die Öffnung des Gehäuses eingesetzt wird und nach unten als ein Körbchen geringeren Durchmessers absteht. Das untere Ende des kleineren Körbchens soll im montierten Zustand des Stopfens nicht auf den Akkumulatorplatten aufstehen, es soll lediglich die Kontrolle und das Nachfüllen erleichtern. Das kleinere Körbchen, das vom Boden des konisch verjüngten Korbes nach unten absteht, dient nämlich als Anzeigeorgan für die notwendige Füllhöhe; bei einer Kontrolle kann leicht festgestellt werden, ob das Füllniveau in Höhe des offenen Bodens des Korbes liegt, von dem das Körbchen geringeren Durchmessers nach unten absteht. Da jedoch der Abstand zwischen der Oberkante der Akkumulatorplatten und der Öffnung der Zelle bei den verschiedenen Batterietypen unterschiedlich ist, muß eine Vielzahl von Körben bereitgehalten werden, um diesen Dimensionsunterschieden Rechnung zu tragen.

Um bei den Batteriestopfen gemäß der Erfindung dieses Problem zu lösen, ist vorgesehen, daß der Korb mit seinem oberen Rand längsverstellbar in dem Gehäuse gehalten ist. Dabei ist es günstig, wenn der Korb mit seinem oberen Rand durch Reibschluß gegen die Innenwand des Gehäuses stufenlos verstellbar in dem Gehäuse fixiert ist. Von dem oberen Rand des Korbes können radial federnde Widerhaken und Rastnoppen abstehen, die für den Reibschluß zwischen Korb und Gehäuse sorgen.

Damit ist es möglich, für alle Batteriegrößen einen einheitlichen Korb bereitzuhalten, der vor dem Einsetzen des Stopfens in die Zellenöffnung so weit wie möglich herausgezogen wird; beim anschließenden Einsetzen in die Zellenöffnung stützt sich der kleine Korb mit seinem unteren Ende auf der Plattenoberseite der Zelle ab und verschiebt sich relativ zu dem Gehäuse, bis dieses vollständig in die Öffnung des Zellendeckels eingesetzt ist.

Ein Höhenausgleich, der durch Wärmeausdehnung der Akkumulatorplatten während des Betriebes erforderlich werden kann, ist infolge des Reibschlusses zwischen Gehäusewand und Widerhaken gegeben.

In Weiterbildung der Erfindung ist vorgesehen, daß die Innenwand des Gehäuses an einer Seite axial übereinanderliegende Rastsitze für den Schnappeingriff der Rastnoppen aufweist. Auf diese Weise ist es möglich, für die Stellung des Korbes vorbestimmte, fixe Positionen festzulegen, die den meisten im Handel befindlichen Bauarten gerecht werden.

Bei der Erfindung ist es möglich, den Korb um 180° verdreht in das Gehäuse einzusetzen, so daß in einer ersten Stellung die Rastnoppen in die Rastsitze eingreifen, während sie in der zweiten, um 180° gedrehten Stellung nicht in diese eingreifen und zur stufenlosen Verstellung der Korbes reibschlüssig an der Innenwand des Gehäuses anliegen.

Die Erfindung ist nachstehend an einem Ausführungsbeispiel erläutert, das in der Zeichnung dargestellt ist. Es zeigen:
Figur 1 einen Längsschnitt durch einen Stopfen gemäß der Erfindung,
Figur 2 eine Seitenansicht des Gehäuses des Stopfens,
Figur 3 eine Unteransicht des Gehäuses der Figur 2,
Figur 4 die Unteransicht einer Hälfte des Labyrintheinsatzes,
Figur 5 einen Schnitt durch den Labyrintheinsatz,
Figur 6 eine Draufsicht des Labyrintheinsaztes der Figuren 4 und 5,
Figur 7 einen Längsschnitt durch den Korb und
Figur 8 eine Draufsicht des Korbes der Figur 7.

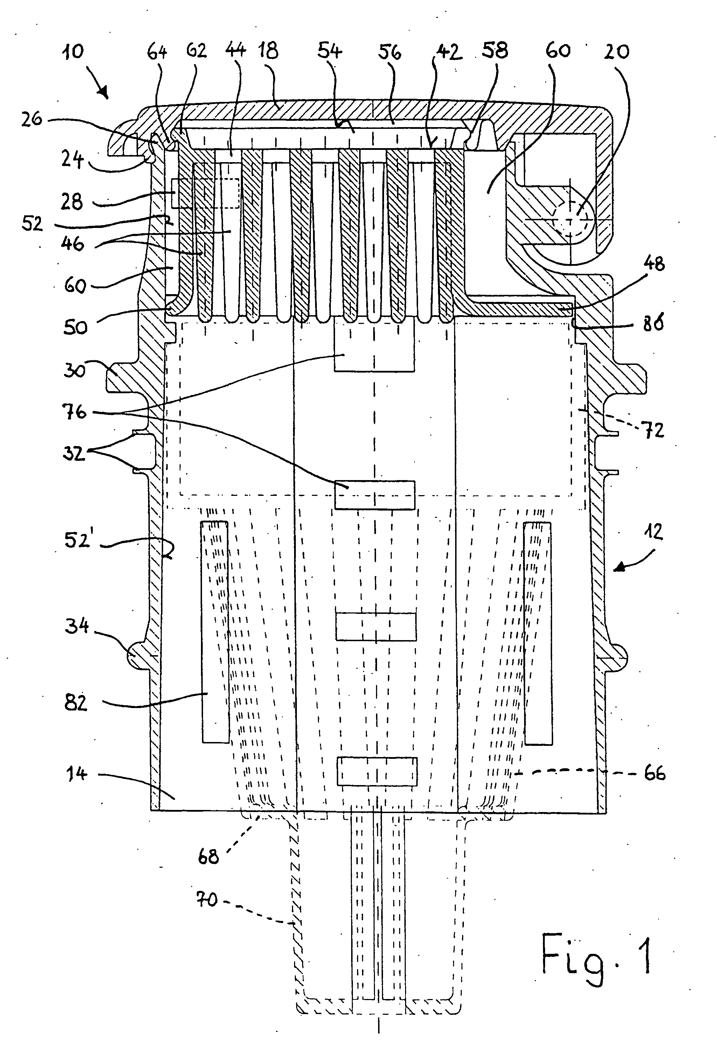

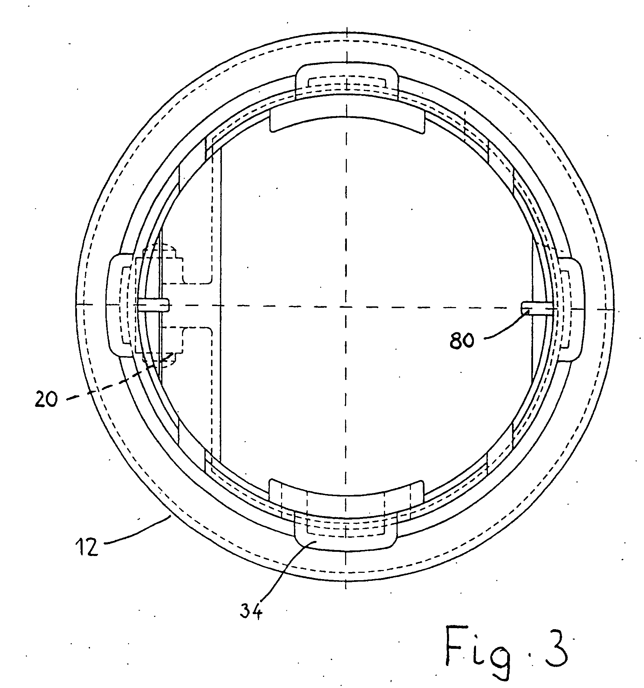

Die Figuren 1 bis 3 zeigen, daß der Stopfen 10 ein im wesentlichen zylindrisches, aus Kunststoff hergestelltes Gehäuse 12 hat, dessen Unterseite 14 offen ist, während die obere Öffnung 16 durch einen Deckel 18 verschlossen ist, der ebenfalls aus Kunststoff gespritzt ist. Der Deckel 18 ist über ein Scharnier 20 schwenkbar am oberen Rand 22 des Gehäuses 12 angelenkt. In der in Figur 1 gezeigten, geschlossenen Stellung übergreift ein elastisch nachgiebiger Randbereich 24 des Deckels 18 mit Schnappsitz eine Raste 26 am oberen Rand 22 des Gehäuses 12.

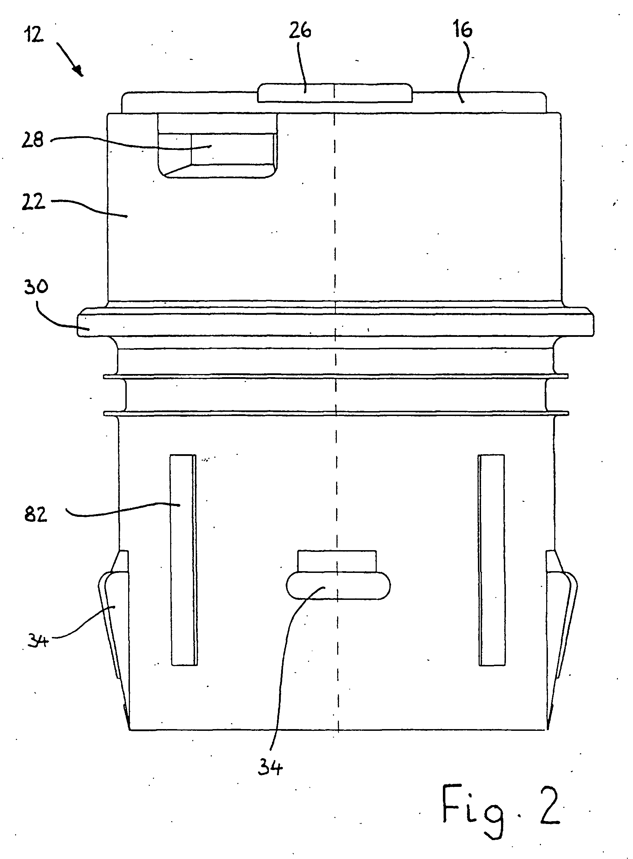

Die Figuren 1 und 2 zeigen ferner, daß in den oberen Rand 22 des Gehäuses 12 eine Entgasungsöffnung 28 eingearbeitet ist, über welche aus der Zelle der Batterie, auf deren Öffnung der Stopfen 10 aufgesetzt ist, Gase nach außen entweichen können.

Im mittleren Bereich des Gehäuses 12 ist ein umlaufender Flansch 30 ausgebildet, der im eingebauten Zustand des Stopfens 10 auf der Zellenöffnung aufliegt. Unterhalb des Flansches 30 sind zwei schmale Dichtlippen 32 an der Außenseite des zylindrischen Gehäuses 12 angeformt, und im unteren Bereich weist das Gehäuse 12 vier nach außen vorstehende Wulste 34 auf, die im eingebauten Zustand des Stopfens 10 die Zellenöffnung am unteren Rand hintergreifen. Zwischen den Wulsten 34 ausgebildete Längsfenster 82 sorgen dafür, daß der untere Bereich des Gehäuses 12 radial elastisch nachgiebig ist.

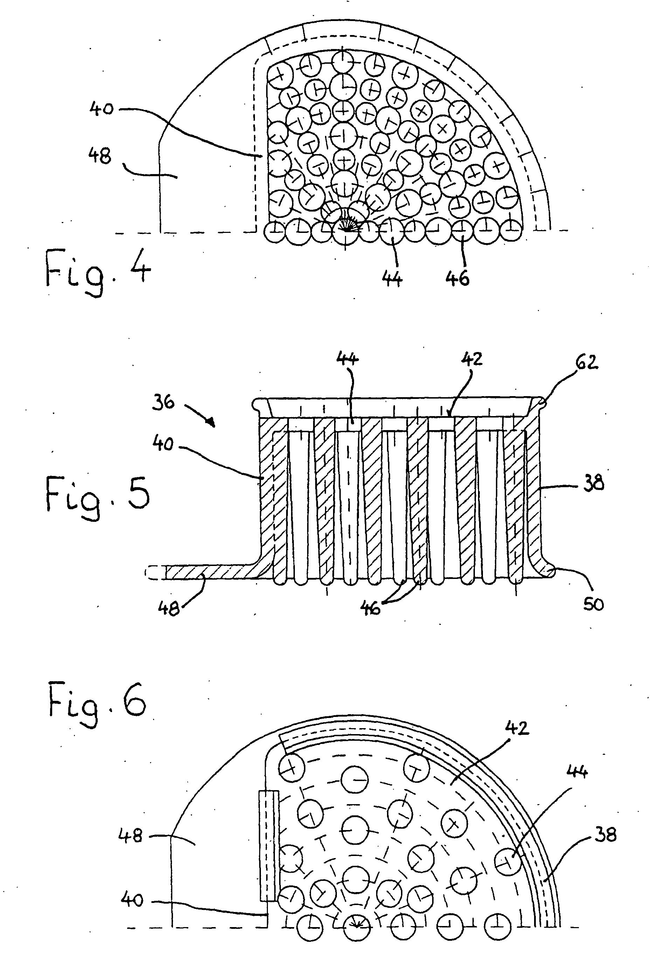

Gemäß der Erfindung ist im Bereich der oberen Öffnung 16 des Gehäuses 12 ein Labyrintheinsatz 36 vorgesehen, der im einzelnen in den Figuren 4 bis 6 dargestellt ist. Dieser ebenfalls aus Kunststoff hergestellte Labyrintheinsatz 36 hat eine teilzylindrische Form mit einer teilzylindrischen Außenwand 38 und einem ebenen Außenwandbereich 40, die beide von einer Decke 42 nach unten abstehen, in welche eine Vielzahl von Löchern 44 eingearbeitet ist. Von der Decke 42 steht eine Vielzahl von Stiften 46 nach unten ab, die gemäß Figur 5 eine konisch auslaufende Form haben.

Von dem unteren Rand des ebenen Außenwandbereiches 40 des Labyrintheinsatzes 36 steht eine zur Decke 42 parallele Zunge 48 ab, die im eingebauten Zustand der Figur 1 unterhalb des Scharniers 20 liegt.

Der Labyrintheinsatz 36 ist mit seinem oberen, radial vorstehenden Rand 62 mit Schnappsitz in einem Aufnahmerand 64 des Deckels 18 befestigt.

Figur 1 zeigt weiter, daß bei geschlossenem Deckel 18 der Labyrintheinsatz 36 mit dem unteren Ende 50 des teilzylindrischen Außenrandes 38 und mit seiner Zunge 48 eine Abdichtung gegen die Innenwand 52 des Gehäuses 12 bildet. Zwischen der Decke 42 und der Innenseite 54 des Deckels 18 ist ein flacher Durchgangsraum 56 begrenzt, der über drei seitliche Durchtrittsöffnungen 58 mit einem Ringraum 60 zwischen dem Labyrintheinsatz 36 und der Innenwand 52 des Gehäuses verbunden ist.

Im eingebauten Zustand des Stopfens 10 nehmen die aufsteigenden Gase auch verdunstende Flüssigkeit mit, die sich beim Durchtritt zwischen den Stiften 46 des Labyrintheinsatzes 36 an den Stiften 46 niederschlägt und aufgrund der dort herrschenden Temperaturen, die niedriger als im unteren Bereich sind, kondensiert. Die kondensierte Flüssigkeit läuft dann an den Stiften 46 nach unten und tropft wieder in die Zelle zurück, in die der Stopfen 10 eingesetzt ist. Bevor die aufsteigenden Gase über den flachen Durchgangsraum 56 und die Durchtrittsöffnungen 58 in den Ringraum 60 gelangen, um von dort über die Entgasungsöffnung 28 ins Freie zu treten, hat möglicherweise noch mitgerissene Flüssigkeit die Möglichkeit, sich in dem flachen Durchgangsraum 56 niederzuschlagen und dort zu kondensieren. Aus diesem Durchgangsraum 56 kann das Kondensat durch die Löcher 44 in der Decke 42 des Labyrintheinsatzes 36 nach unten ablaufen.

Gelangt das zweimal kondensierte Gas in den Ringraum 60, so wird sich dort nochmals ein geringer Anteil Kondensat absetzen. Dieses kann durch einen schmalen Spalt 86 zwischen Zunge 48 und Gehäusewand 52 in die Zelle zurückfließen.

Wenn der Deckel 18 bei einer Kontrolle um das Scharnier 20 in seine Öffnungsstellung geschwenkt wird, fließt aufgrund der Schwerkraft das an den Stiften 46 noch anhaftende Kondensat über die offene Unterseite 14 des Gehäuses 12 in die Zelle zurück.

Versuche mit den Stopfen gemäß der Erfindung haben ergeben, daß gegenüber bisher bekannten Stopfen ohne Labyrintheinsatz 36 eine erheblich größere Flüssigkeitsrückführung in die Batteriezelle erreicht wird. Statt bei bisherigen Stopfen die Batteriezellen z.B. täglich nachfüllen zu müssen, genügt jetzt eine Nachfüllung nur noch jeden zweiten oder dritten Tag.

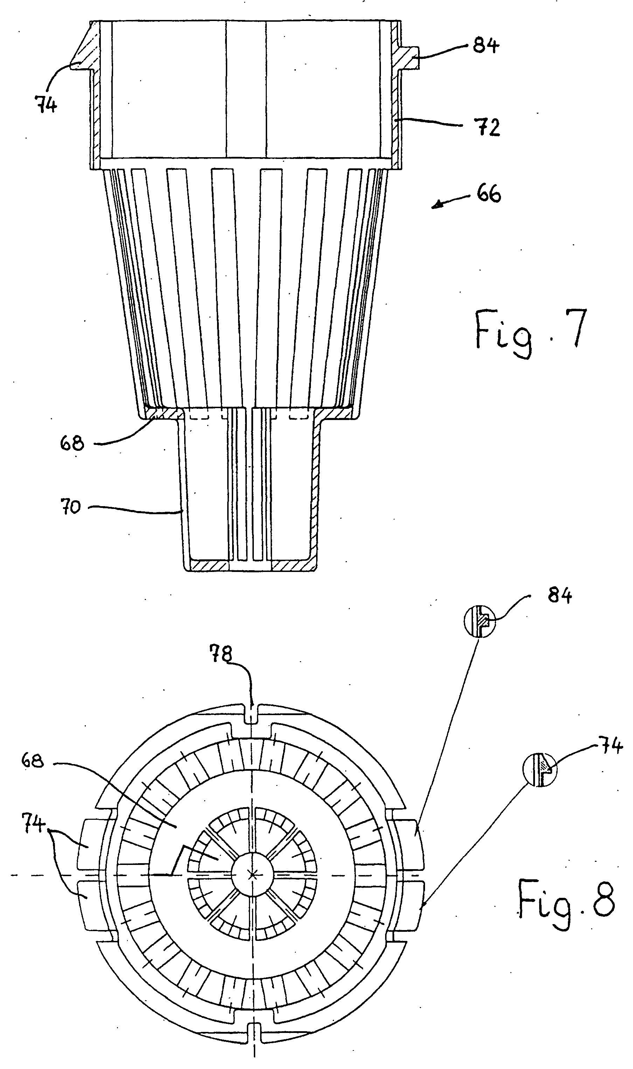

In Weiterbildung der Erfindung ist gemäß den Figuren 1, 7 und 8 in die untere Öffnung des Gehäuses 12 ein nach unten konisch verjüngter Korb 66 eingesetzt, von dessen offenem Boden 68 ein Körbchen 70 geringeren Durchmessers absteht. Korb 66 und Körbchen 70 sind ebenfalls aus Kunststoff im Spritzgußverfahren einstückig hergestellt. Der Korb 66 ist an seinem oberen, zylindrischen Rand 72 auf der in den Figuren 7 und 8 linken Seite mit Widerhaken 74 versehen, die aufgrund der radialen Nachgiebigkeit reibschlüssig an der zylindrischen Innenwand 52', des Gehäuses 12 anliegen.

In die Innenwand 52' des Gehäuses 12 sind auf einer Seite axial übereinanderliegend vier Rastsitze 76 eingearbeitet, in die die in Figur 7 rechte Rastnoppe 84, die ein Rechteckprofil hat, einschnappen kann. Auf diese Weise kann der Korb 66 in vier unterschiedlichen Höhen innerhalb des Gehäuses 12 fixiert werden. Der neben der Rastnoppe 84 ausgebildete Widerhaken 74 dient als Endanschlag und verhindert ein Herausfallen des Korbes 66 in seiner untersten Stellung.

Wenn der Korb 66 vollständig aus dem Gehäuse 12 herausgezogen wird, kann er um 180° verdreht wieder in dieses eingesetzt werden, so daß nun die in Figur 7 linken Widerhaken 74, die eine andere Form als die Rastnoppe 84 aufweisen, im Bereich der Rastsitze 76 liegen, jedoch nicht rastend in diese eingreifen. In dieser zweiten Stellung kann der Korb 66 somit reibschlüssig und stufenlos an der Innenwand 52' des Gehäuses 12 verstellt werden.

In den oberen, zylindrischen Rand 72 des Korbes 66 sind diametral gegenüberliegend zwei Längsschlitze 78 eingearbeitet, in die zwei von der Innenwand 52' des Gehäuses 12 abstehende Führungsrippen 80 eingreifen. Diese definieren zusammen mit den beiden Längsschlitzen 78 die beiden um 180° verdrehten Stellungen des Korbes 66 in dem Gehäuse 12.

## Patentansprüche

1. Stopfen zum Verschließen von Batteriezellen mit einem in eine Öffnung der Zelle einsetzbaren, im wesentlichen zylindrischen, unten offenen Gehäuse (12), dessen obere Öffnung (16) durch einen Deckel (18) verschließbar ist, wobei im Bereich der oberen Öffnung (16) des Gehäuses (12) ein Sammelorgan zur Aufnahme aufsteigender und kondensierter Gase angeordnet ist, das aus einer Vielzahl von Stiften (46) besteht, die von einer Decke (42) nach unten abstehen, **dadurch gekennzeichnet, daß** das Sammelorgan aus einem Labyrintheinsatz (36) besteht, der eine von Löchern (44) durchsetzte Decke (42) hat, von der die Stifte (46) nach unten abstehen.

2. Stopfen nach Anspruch 1, **dadurch gekennzeichnet, daß** der Labyrintheinsatz (36) an der Innenseite (54) des Deckels (18) angebracht ist.

3. Stopfen nach Anspruch 2, **dadurch gekennzeichnet, daß** der Labyrintheinsatz (36) mit Schnappsitz im Deckel (18) befestigt ist.

4. Stopfen nach einem der vorhergehenden Ansprüche, **dadurch gekennzeichnet, daß** bei geschlossenem Deckel (18) der Labyrintheinsatz (36) mit seinem unteren Rand (50) eine Abdichtung gegen die Innenwand (52) des Gehäuses (12) bildet und zwischen seiner Decke (42) und der Innenseite (54) des Deckels (18) einen flachen Durchgangsraum (56) begrenzt, der über seitliche Durchtrittsöffnungen (58) mit einem Ringraum (60) zwischen dem Labyrintheinsatz (36) und der eine Entgasungsöffnung (28) aufweisenden Innenwand (52) des Gehäuses (12) verbunden ist.

5. Stopfen nach Anspruch 4, **dadurch gekennzeichnet, daß** von einem Teil des unteren Randes des Labyrintheinsatzes (36) eine zur Decke (42) parallele Zunge (48) absteht, die den Ringraum (60) nach unten begrenzt und unterhalb eines Scharniers (20) liegt, über welches der Deckel (18) schwenkbar am Gehäuse (12) angelenkt ist.

6. Stopfen nach einem der vorhergehenden Ansprüche, **dadurch gekennzeichnet, daß** in die untere Öffnung des Gehäuses (12) ein nach unten konisch verjüngter Korb (66) eingesetzt ist, von dessen offenem Boden (68) ein Körbchen (70) geringeren Durchmessers absteht, wobei der Korb (66) mit seinem oberen Rand (72) längsverstellbar in dem Gehäuse (12) gehalten ist.

7. Stopfen nach Anspruch 6, **dadurch gekennzeichnet, daß** der Korb (66) mit seinem oberen Rand (72) durch Reibschluß gegen die Innenwand (52') des Gehäuses (12) stufenlos verstellbar in dem Gehäuse (12) fixiert ist.

8. Stopfen nach Anspruch 7, **dadurch gekennzeichnet, daß** von dem oberen Rand (72) des Korbes (66) radial federnde Widerhaken (74) und Rastnoppen (84) abstehen.

9. Stopfen nach den Ansprüchen 6 und 8, **dadurch gekennzeichnet, daß** die Innenwand (52') des Gehäuses (12) axial übereinanderliegende Rastsitze (76) für den Schnappeingriff einer Rastnoppe (84) aufweist.

10. Stopfen nach einem der Ansprüche 7 bis 9, **dadurch gekennzeichnet, daß** der Korb (66) um 180° verdrehbar in das Gehäuse (12) einsetzbar ist derart, daß in einer ersten Stellung die Rastnoppe (84) in die Rastsitze (76) eingreift, während sie in der zweiten, um 180° geschwenkten Stellung nicht im Bereich der Rastsitze (76) liegt und zur stufenlosen Verstellung des Korbes (66) reibschlüssig an der glatten Innenwand (52') des Gehäuses (12) anliegt.

11. Stopfen nach Anspruch 10, **dadurch gekennzeichnet, daß** in den oberen Rand (72) des Korbes (66) diametral gegenüberliegend zwei Längsschlitze (78) eingearbeitet sind, in die zwei von der Innenwand (52') des Gehäuses (12) abstehende Führungsrippen (80) eingreifen.

## Claims

1. A battery plug for closing battery cells, with a substantially cylindrical housing (12) open at the bottom and insertable into an opening in the cell, the upper opening (16) of the said housing being closable with a lid (18), wherein a collector consisting of a large number of pins (46) which project downwards from a cover (42), is arranged in the region of the upper opening (16) of the housing (12) for the purpose of collecting gases that rise and condense, **characterised in that** the collector consists of a labyrinth insert (36) which has a cover (42) perforated with holes (44), from which cover the pins (46) project downwards.

2. A plug according to Claim 1, **characterised in that** the labyrinth insert (36) is attached on the inside (54) of the lid (18).

3. A plug according to Claim 2, **characterised in that** the labyrinth insert (36) is fixed in the lid (18) in a snap fit.

4. A plug according to one of the preceding claims, **characterised in that** when the lid (18) is closed, the labyrinth insert (36) forms a seal with its lower edge (50) against the internal wall (52) of the housing (12) and, between its cover (42) and the inside (54) of the lid (18), delimits a flat passage (56) which, via lateral entry openings (58), is connected to an annular space (60) between the labyrinth insert (36) and the internal wall (52) of the housing (12) having a venting opening (28).

5. A plug according to Claim 4, **characterised in that** a tongue (48), parallel to the cover (42) and positioned beneath a hinge (20), projects from part of the lower margin of the labyrinth insert (36), limiting the annular space (60) at the bottom, the lid (18) being pivotally linked to the housing (12) via the said hinge (20).

6. A plug according to one of the preceding claims, **characterised in that** a basket (66), conically tapering towards the bottom, is inserted into the lower opening of the housing (12), a small basket (70) of smaller diameter projecting from the open bottom (68) of the said basket (66), the basket (66) being held with its upper margin longitudinally displaceable in the housing (12).

7. A plug according to Claim 6, **characterised in that** the basket (66) is fixed by friction resistance in the housing (12) with its upper margin (72) continuously displaceable against the internal wall (52') of the housing (12).

8. A plug according to Claim 7, **characterised in that** radially resilient barbs (74) and locking studs (84) project from the upper margin (72) of the basket (66).

9. A plug according to Claims 6 and 8, **characterised in that** the internal wall (52') of the housing (12) has locking receptacles (76) lying axially above one another for the snap engagement of a locking stud (84).

10. A plug according to one of Claims 7 to 9, **characterised in that** the basket (66), insertable into the housing (12) and rotatable through 180°, is of a kind such that, in a first position, the locking stud (84) engages with the locking receptacles (76), whereas in the second position swivelled through 180°, it is not in the region of the locking receptacles (76) and lies adjacent to the smooth internal wall (52') of the housing (12).

11. A plug according to Claim 10, **characterised in that** two longitudinal slits (78) positioned diametrically opposite one another are incorporated in the upper margin (72) of the basket (66), two guide ribs (80) projecting from the internal wall (52') of the housing (12) engaging with the said longitudinal slits (78).

## Revendications

1. Bouchon pour fermer les éléments d'une batterie avec un corps (12) essentiellement cylindrique, ouvert en bas, insérable dans un orifice de l'élément et dont l'ouverture supérieure (16) se ferme par un couvercle (18), le corps (12) étant muni en l'occurrence, dans la zone de son ouverture supérieure (16), d'un organe collecteur destiné à recueillir les gaz ascendants et condensés et composé d'une multitude de pointes (46) saillant d'une paroi supérieure (42) et dirigées vers le bas, **caractérisé en ce que** l'organe collecteur est constitué d'un insert labyrinthe (36) qui présente une paroi supérieure (42) percée de trous (44) de laquelle saillent les pointes (46) dirigées vers le bas.

2. Bouchon selon la revendication 1, **caractérisé en ce que** l'insert labyrinthe (36) est monté sur la face interne (54) du couvercle (18).

3. Bouchon selon la revendication 2, **caractérisé en ce que** l'insert labyrinthe (36) est fixé dans le couvercle (18) par encliquetage.

4. Bouchon selon l'une des revendications précédentes, **caractérisé en ce que**, le couvercle (18) étant fermé, l'insert labyrinthe (36) forme avec son rebord inférieur (50) un joint contre la paroi intérieure (52) du corps (12) et délimite entre sa paroi supérieure (42) et la face interne (54) du couvercle (18) un espace de passage plat (56), qui est relié par des ouvertures de passage latérales (58) à un espace annulaire (60) situé entre l'insert labyrinthe (36) et la paroi intérieure (52) du corps (12) munie d'un orifice de dégazage (28).

5. Bouchon selon la revendication 4, **caractérisé en ce qu'**une languette (48) parallèle à la paroi supérieure (42) saille d'une partie du rebord inférieur de l'insert labyrinthe (36) et limite vers le bas l'espace annulaire (60), cette languette étant située en l'occurrence en dessous d'une charnière (20) qui permet l'articulation du couvercle (18) sur le corps (12).

6. Bouchon selon l'une des revendications précédentes, **caractérisé en ce que** dans l'ouverture inférieure du corps (12) est inséré un panier (66) rétréci en cône vers le bas et présentant un fond ouvert (68) duquel dépasse un petit panier (70) de diamètre inférieur, le panier (66) étant maintenu avec son rebord supérieur (72) dans le corps (12) de façon réglable en longueur.

7. Bouchon selon la revendication 6, **caractérisé en ce que** le panier (66) est fixé avec son rebord supérieur (72) dans le corps (12) de façon réglable en continu par friction contre la paroi intérieure (52') du corps (12).

8. Bouchon selon la revendication 7, **caractérisé en ce que** des ergots (74) et des tétons d'arrêt (84) faisant ressort radialement saillent du rebord supérieur (72) du panier (66).

9. Bouchon selon les revendications 6 et 8, **caractérisé en ce que** la paroi intérieure (52') du corps (12) présente des logements d'arrêt (76) superposés axialement et permettant l'encliquetage d'un téton d'arrêt (84).

10. Bouchon selon l'une des revendications 7 à 9, **caractérisé en ce que** le panier (66) est insérable dans le corps (12) en étant tourné de 180° de telle sorte que dans une première position le téton d'arrêt (84) s'engrène dans les logements d'arrêt (76), tandis que dans la deuxième position, tournée de 180°, il ne se situe pas dans la zone des logements d'arrêt (76) et s'ajuste par friction sur la paroi intérieure lisse (52') du corps (12) afin que le panier (66) soit réglable en continu.

11. Bouchon selon la revendication 10, **caractérisé en ce que** dans le rebord supérieur (72) du panier (66) sont pratiquées deux fentes oblongues (78) diamétralement opposées, dans lesquelles s'engrènent deux nervures de guidage (80) qui saillent de la paroi intérieure (52') du corps (12).
